# EUROPÄISCHE PATENTSCHRIFT

(11) **EP 0 976 012 B1**
(45) Veröffentlichungstag und Bekanntmachung des Hinweises auf die Patenterteilung: **24.07.2002**
(21) Anmeldenummer: 98913559.5
(22) Anmeldetag: 18.02.1998
(51) Int. Cl.: G05B 9/03

(54) **MIKROPROZESSORSYSTEM FÜR SICHERHEITSKRITISCHE REGELUNGEN**
MICROPROCESSOR SYSTEM FOR SAFETY-CRITICAL CONTROL SYSTEMS
SYSTEME DE MICROPROCESSEUR POUR SYSTEMES DE REGULATION A SECURITE CRITIQUE

(30) Priorität: 18.04.1997 DE 19716197
(43) Veröffentlichungstag der Anmeldung: 02.02.2000
(73) Patentinhaber: Continental Teves AG & Co. oHG, 60488 Frankfurt (DE)
(72) Erfinder: GIERS, Bernard, D-60320 Frankfurt am Main (DE)
(86) Internationale Anmeldenummer: EP9800921
(87) Internationale Veröffentlichungsnummer: WO9848326

(56) Entgegenhaltungen:
- EP-A- 0 346 804
- EP-A- 0 399 308
- DE-A- 3 225 455
- DE-A- 3 234 637
- DE-A- 4 137 124
- DE-A- 4 341 082
- DE-A- 19 529 434
- US-A- 4 672 530
- US-A- 5 583 769
- SMITH S E: "TRIPLE REDUNDANT FAULT TOLERANCE: A HARDWARE-IMPLEMENTED APPROACH" ISA TRANSACTIONS, Bd. 30, Nr. 4, 1.Januar 1991, Seiten 87-95, XP000275596
- GUDEA D D ET AL: "FAULT TOLERANT POWER CONTROLLER" PROCEEDINGS OF THE INTERSOCIETY ENERGY CONVERSION ENGINEERING CONFERENCE. (IECEC), WASHINGTON, AUG. 6 - 11, 1989, Bd. VOL. 1, Nr. CONF. 24, 6.August 1989, JACKSON W D;HULL D A, Seiten 231-237, XP000078771

## Beschreibung

Die Erfindung bezieht sich auf ein Mikroprozessorsystem der im Oberbegriff des Hauptanspruchs beschriebenen Art. Es handelt sich um ein System für sicherheitskritische Regelungen, mit redundanter Datenverarbeitung, mit mehreren Zentraleinheiten , welche über separate Bus-Systeme mit Festwertspeichern und Schreib-Lesespeichern, die auch Speicherplätze für Prüfdaten enthalten, mit Eingabe- und Ausgabeeinheiten und mit Vergleichern, die die Ausgangsdaten oder Ausgangssignale der Zentraleinheiten auf Übereinstimmung überprüfen, verbunden sind. Diese Zentraleinheiten arbeiten das gleiche Programm ab, wobei die Zentraleinheiten über die Bus-Systeme miteinander kommunizieren und wobei die Bus-Systeme untereinander durch Bypässe verbunden sind, die den Zentraleinheiten ein gemeinsames Lesen und Abarbeiten der anstehenden Daten, einschließlich der Prüfdaten und Befehle, ermöglichen.

Ein derartiges System ist aus der DE 195 29 434 A1 bekannt. Es sind zwei synchron betriebene Zentraleinheiten auf einem oder auf mehreren Chips vorgesehen, die die gleichen Eingangsinformationen erhalten und das gleiche Programm abarbeiten. Die beiden Zentraleinheiten sind dabei über separate Bus-Systeme an die Festwert- und an die Schreib-Lese-Speicher sowie an Eingabe- und Ausgabeeinheiten angeschlossen. Die Bus-Systeme sind untereinander durch Treiberstufen bzw. beiten. Die beiden Zentraleinheiten sind dabei über separate Bus-Systeme an die Festwert- und an die Schreib-Lese-Speicher sowie an Eingabe- und Ausgabeeinheiten angeschlossen. Die Bus-Systeme sind untereinander durch Treiberstufen bzw. Bypässe verbunden, die den beiden Zentraleinheiten ein gemeinsames Lesen und Abarbeiten der zur Verfügung stehenden Daten, einschließlich der Prüfdaten und Befehle ermöglichen. Das System ermöglicht eine Einsparung von Speicherplatz; nur eine der beiden Zentraleinheiten ist (direkt) mit einem vollwertigen Festwert- und einem Schreib-Lese-Speicher verbunden, während die Speicherkapazität des zweiten Prozessors auf Speicherplätze für Prüfdaten (Paritätsüberwachung) in Verbindung mit einem Prüfdatengenerator beschränkt ist. Über die Bypässe besteht Zugriff zu allen Daten. Dadurch sind beide Zentraleinheiten in der Lage, jeweils das vollständige Programm abzuarbeiten.

Aus der Veröffentlichung von Steven E. Smith mit dem Titel "Triple Redundant Fault Tolerance: A Hardware-Implemented Approach,' (ISA Transactions, Bd. 30, Nr.4, Januar 1991, Seiten 87-95) ist auch bereits ein Mikroprozessorsystem mit redundanter Datenverarbeitung in drei Datenverarbeitungssystemen beschrieben, bei dem bei Ausfall eines Systems durch Majoritätsentscheidung die fehlerhafte Stufe identifiziert wird und ein Übergang zu einer Notlauffunktion stattfindet. Alle Datenverarbeitungssysteme sind mit ausreichend Speicherplätzen für die individuelle Datenverarbeitung ausgerüstet.
Zu den sicherheitskritischen Regelungen der hier in Rede stehenden Art zählen u.a. die in die Bremsenfunktion eines Kraftfahrzeugs eingreifenden Regelungssysteme, die in großer Anzahl und großer Vielfalt auf dem Markt sind. Beispiele hierfür sind die Antiblockiersysteme (ABS), Antriebsschlupfregelungssysteme (ASR), Fahrstabilitätsregelungen (FDR, ASMS), Fahrwerksregelungssysteme etc. Ein Ausfall eines solchen Regelungssystems führt zur Gefährdung der Fahrstabilität des Fahrzeugs. Daher wird die Funktionsfähigkeit der Systeme ständig überwacht, um beim Auftreten eines Fehlers die Regelung abschalten oder in einen für die Sicherheit weniger gefährlichen Zustand umschalten zu können.

Noch kritischer sind Bremssysteme bzw. Kraftfahrzeug-Regelungssysteme, bei denen bei Ausfall der Elektronik keine Umschaltung auf ein mechanisches oder hydraulisches System möglich ist. Hierzu zählen Bremssystemkonzepte, wie "brake-by-wire", die voraussichtlich in der Zukunft noch an.Bedeutung gewinnen werden; die Bremsenfunktion ist bei solchen Systemen auf eine intakte Elektronik angewiesen.

Ein Beispiel für eine Schaltungsanordnung oder ein Microprozessorsystem zur Steuerung und Überwachung einer blockiergeschützten Fahrzeugbremsanlage ist aus der DE 32 34 637 C2 bekannt. Nach dieser Schrift werden die Eingangsdaten zwei identisch programmierten Microcomputern parallel zugeführt und dort synchron verarbeitet. Die Ausgangssignale und Zwischensignale der beiden Microcomputern werden mit Hilfe von redundanten Vergleichern auf Übereinstimmung geprüft. Wenn die Signale voneinander abweichen, wird über eine ebenfalls redundant ausgelegte Schaltung eine Abschaltung der Regelung herbeigeführt. Bei dieser bekannten Schaltung dient einer der beiden Microcomputer zur Erzeugung der Bremsdrucksteuersignale, der andere zur Bildung der Prüfsignale. Bei diesem symmetrisch aufgebauten Microprozessorsystem sind also zwei vollständige Microcomputer, einschließlich der zugehörigen Festwert- und Schreib-Lese-Speicher, erforderlich.

Nach einem anderen bekannten System, nach dem die in der DE 41 37 124 A1 beschriebene Schaltung aufgebaut ist, werden die Eingangsdaten ebenfalls zwei Microcomputern parallel zugeführt, von denen jedoch nur einer die vollständige, aufwendige Signalverarbeitung ausführt. Der zweite Microcomputer dient-vornehmlich zur Überwachung, weshalb die Eingangssignale nach Aufbereitung, Bildung von zeitlichen Ableitungen etc. mit Hilfe vereinfachter Regelalgorithmen und vereinfachter Regelphilosophie weiterverarbeitet werden können. Die vereinfachte Datenverarbeitung reicht zur Erzeugung von Signalen aus, die durch Vergleich mit den in dem aufwendigeren Microcomputer verarbeiteten Signalen Rückschlüsse auf den ordnungsgemäßen Betrieb des Systems zulassen. Durch die Verwendung eines Prüf-Microcomputers geringerer Leistungsfähigkeit läßt sich der Herstellungsaufwand im Vergleich zu einem System mit zwei vollständigen, aufwendigen Microcomputern gleicher Leistung reduzieren.

Aus der DE 43 41 082 A1 ist bereits ein Mikroprozessorsystem bekannt, das insbesondere für das Regelsystem einer blockiergeschützten Bremsanlage vorgesehen ist. Dieses bekannte System, das auf einem einzigen Chip untergebracht werden kann, enthält zwei Zentraleinheiten, in denen die Eingangsdaten parallel verarbeitet werden. Die Festwert- und die Schreib-Lese-Speicher, die an die beiden Zentraleinheiten angeschlossen sind, enthalten zusätzliche Speicherplätze für Prüfinformationen und umfassen jeweils einen Generator zur Erzeugung von Prüfinformationen. Die Ausgangssignale eines der beiden Zentraleinheiten werden zur Erzeugung der Steuersignale weiterverarbeitet, während die andere als passive Zentraleinheit lediglich zur Überwachung der aktiven Zentraleinheit dient.

Bei den vorgenannten, bekannten Systemen wird also grundsätzlich die erforderliche Sicherheit durch Redundanz der Datenverarbeitung erreicht. Im ersten Fall (DE 32 34 637 C2) basiert das System auf die Verwendung von zwei Prozessoren mit identischer Software, was in Fachkreisen als symmetrische Redundanz bezeichnet wird. Im zweiten Fall (DE 41 37 124 A1) werden zwei Prozessoren mit unterschiedlicher Software verwendet (sog. asymmetrische Redundanz). Grundsätzlich ist es auch möglich, einen einzigen Prozessor zu verwerten, der auf Basis unterschiedlicher Algorithmen die Eingangsdaten verarbeitet, wobei dann zusätzliche Überprüfungsalgorithmen zum Feststellen eines fehlerfreien Arbeitens Anwendung finden.

Alle vorgenannten Systeme beruhen grundsätzlich auf dem Vergleich redundant verarbeiteter Daten und der Erzeugung eines Fehlersignals, wenn Abweichungen auftreten. Beim Auftreten eines Fehlers oder Ausfall eines Systems kann dann die Regelung abgeschaltet werden. In keinem Fall ist eine Notlauffunktion, nämlich einer Fortsetzung der Regelung nach dem Auftreten des Fehlers, möglich. Eine solche Notlauffunktion wäre grundsätzlich nur durch Verdoppelung der redundanten Systeme in Verbindung mit einem Identifizieren und Abschalten der Fehlerquelle denkbar.
Der vorliegenden Erfindung liegt nun die Aufgabe zugrunde, ein Mikroprozessorsystem der eingangs genannten Art mit höchstens geringem Mehraufwand derart auszugestalten, dass beim Auftreten eines Fehlers ohne Beeinträchtigung der Sicherheit eine Notlauffunktion möglich wird.

Es hat sich herausgestellt, dass diese Aufgabe durch das im Anspruch 1 beschriebene Mikroprozessorsystem gelöst werden kann. Die Besonderheit dieses Systems besteht darin, dass drei Zentraleinheiten vorhanden sind, die durch redundante Peripherie-Einheiten zu zwei vollständigen Regelungssignalkreisen erweitert und derart zusammengeschaltet sind, dass die drei Zentraleinheiten zusammen mit den Speichern, mit den Eingabe- und Ausgabeeinheiten und mit den Peripherie-Einheiten insgesamt zwei vollständige und ein unvollständiges Datenverarbeitungssystem bilden und dass bei Ausfall einer Zentraleinheit und/oder zugehöriger Komponenten durch Majoritätsentscheidung in einer Identifizierungsstufe die fehlerhafte Zentraleinheit identifiziert und eine Notlauffunktion aufrechterhalten wird, wobei in der Notlauffunktion die redundante Datenverarbeitung sowie der Vergleich der Datenverarbeitungsergebnisse auf Übereinstimmung aufrechterhalten und eine Nicht-Übereinstimmung signalisiert wird und wobei eine Ausgabe von Ausgangssignalen oder Steuersignalen unter Einschluss bzw. in Abhängigkeit von dem fehlerhaften System bzw. der fehlerhaften Zentraleinheit verhindert wird.

Die Erfindung geht also gewissermaßen von dem vorgenannten, aus der DE 195 29 434 A1 bekannten System aus, das im Prinzip aus einem vollständigen und einem unvollständigen Datenverarbeitungssystem besteht, und erweitert dieses System durch ein zusätzliches, vollständiges Datenverarbeitungssystem mit den zugehörigen Peripherie-Einheiten. Auf diese Weise entstehen zwei vollständige Regelungssignalkreise oder Regelungssignalverarbeitungssysteme, die zu einem notlauffähigen Gesamtsystem zusammengeschaltet sind, das auch bei Ausfall eines Prozessors bzw. einer Zentraleinheit eine Aufrechterhaltung der Regelung mit redundanter Datenverarbeitung und damit mit der geforderten hohen Sicherheit gewährleistet. Durch die erfindungsgemäße Zusammenschaltung der einzelnen Systeme oder Komponenten wird also auch bei Ausfall eines Prozessors die Redundanz der Datenverarbeitung aufrechterhalten.

Der Gesamtaufwand an Speicherplätzen, der wesentlich den Preis des Mikroprozessorsystems bestimmt, wird im Vergleich zu einer Verarbeitung in einem nicht redundanten System lediglich um wenig mehr als 100% erhöht, wobei die Aufteilung und Zuordnung der Speicherplätze zu den einzelnen Prozessoren in weiten Grenzen variabel ist; es muss lediglich sichergestellt sein, dass jeder einzelne Prozessor bzw. jede einzelne Prozessoreinheit das volle Programm abarbeiten kann und außerdem zu den Prüfdaten bzw. Redundanzdaten Zugriff hat. Im Vergleich zu einem nicht redundanten System wird eine verdoppelte Speicherkapazität, zuzüglich einiger Speicherplätze für die Redundanzdaten, benötigt.

Die erfindungsgemäße Ausgestaltung des Mikroprozessorsystems ermöglicht die Unterbringung aller oder der wesentlichen Komponenten, insbesondere sämtlicher Zentraleinheiten, Speicher, der Vergleicher und der Bypässe sowie ggf. auch der Eingabe- und Ausgabeeinheiten, auf einem einzigen Chip.

Die drei Zentraleinheiten des erfindungsgemäßen Systems bilden also zusammen mit den Speichern, mit den Ein- und Ausgabeeinheiten und mit den Peripherie-Einheiten die zwei vollständigen und das unvollständiges Datenverarbeitungssystem. Die für einen vollständigen Programmablauf benötigten Speicherplätze sind allerdings auf zwei Datenverarbeitungssysteme aufgeteilt. Diese Datenverarbeitungsssysteme umfassenvorteilhafterweise jeweils mindestens eine Zentraleinheit und ein Bus-System sowie Festwert- und Schreib-Lese-Speicher und/oder Redundanzinformationsspeicher, wobei die Speicherplätze derart auf die einzelnen Datenverarbeitungssysteme verteilt sind, dass beim Auftreten eines Fehlers und Übergang zur Notlauffunktion die intakten Systeme ausreichend Speicherplätze für die komplette Datenverarbeitung und für Redundanzinformationen enthalten und das komplette Programm abarbeiten.

Ein weiteres Ausführungsbeispiel nach der Erfindung besteht darin, dass zumindest die Zentraleinheiten mit den Bus-Systemen, die Speicher, die Bypass-Einheiten, die Eingabe- und Ausgabeeinheiten und einige oder alle Vergleicher auf einem gemeinsamen Chip angeordnet sind.

In den Unteransprüchen sind noch weitere vorteilhafte Ausführungsbeispiele beschrieben.

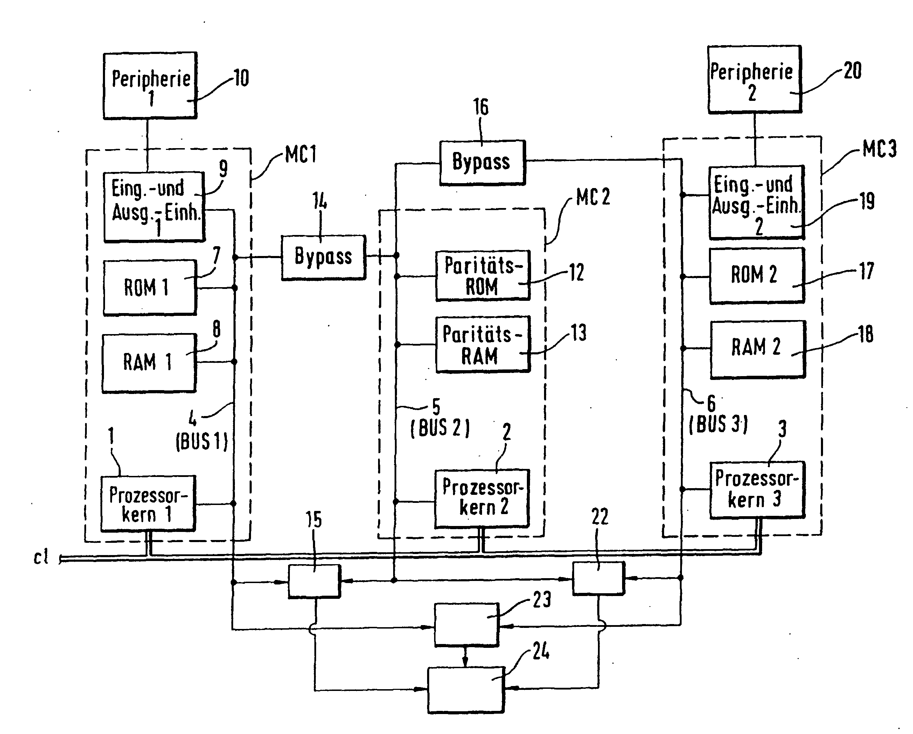

Aus der beigefügten Abbildung, welche in schematisch vereinfachter Darstellung die wesentlichen Komponenten eines Mikroprozessorsystems nach der Erfindung wiedergibt, und aus der nachfolgenden Beschreibung gehen weitere Einzelheiten der Erfindung hervor. Diese Abbildung dient zur Erläuterung des prinzipiellen Aufbaus und der Wirkungsweise eines Ausführungsbeispiels der Erfindung.

Die Abbildung bezieht sich auf ein Ein-Chip-Mikrocomputersystem, das drei synchron betriebene Prozessoren oder Zentraleinheiten 1,2,3, die auch als Rechner- oder, wegen ihrer Funktion, als Prozessorkerne bezeichnet werden. Jedem Prozessor ist ein Bus-System 4,5,6 zugeordnet. Die Zentraleinheiten 1,2,3 sind an eine synchrone Taktversorgung cl (common clock), die redundant ausgelegt ist, angeschlossen.

Die Zentraleinheit 1 bzw. der Prozessorkern 1 ist durch einen Festwertspeicher 7 (ROM 1), durch einen Schreib-Lese-Speicher 8 (RAM 1), durch eine Eingabe- und Ausgabeeinheit 9 zu einem vollständigen Datenverarbeitungssystem oder Mikrocomputer MC1 ergänzt. Die notwendigen Peripheriekomponenten (Peripherie 1) sind durch einen externen Block 10 symbolisiert. Zu den Peripheriekomponenten zählen die Spannungsversorgung, die Zuführung der Eingangssignale (z.B. der Sensorsignale bei einem KFZ-Regelungssystem) und die Aktuatoroder Ventilansteuerung etc. mit Hilfe der Ausgangsdaten oder -signale der Datenverarbeitungssysteme.

Ein zweites, unvollständiges Datenverarbeitungssystem oder Mikrocomputer MC2, in dem die Zentraleinheit 2 untergebracht ist, enthält im wiedergegebenen Ausführungsbeispiel lediglich Speicherplätze für Prüfdaten bzw. für die Redundanzfunktion. Symbolisch dargestellt sind im Inneren des Mikrocomputers MC2 Festwertspeicherplätze 12 für eine Paritätsüberwachung (Paritäts-ROM) und Speicherplätze 13 für die Redundanzdaten im Schreib-Lese-Bereich (Paritäts-ROM). Die zugehörigen Prüfdaten- oder Redundanzgeneratoren sind der besseren Übersichtlichkeit wegen nicht dargestellt.

Über das Bus-System 5 (BUS 2) und über einen Bypass 14 sind BUS 1 (Bus-System 4) und BUS 2 (Bus-System 5) miteinander verbunden. Der Bypass 14 ermöglicht der Zentraleinheit 1 ein Lesen der in den Speicherplätzen 12, 13 gespeicherten Paritätsdaten und gestattet einen Datenfluß von den Speichern 7, 8 und dem Prozessorkern 1 des Mikrocomputers MC1 zu dem Mikrocomputer MC2, insbesondere zu der Zentraleinheit 2. Auf diese Weise ist ein redundantes Abarbeiten des vollständigen Datenverarbeitungs-Programms durch beide Zentraleinheiten 1,2 gewährleistet. Noch weitere Einzelheiten zu dem Aufbau und der Funktionsweise solcher Mikroprozessorsysteme sind der vorgenannten DE 195 29 434 A1 zu entnehmen.

Die Datenverarbeitungs-Ergebnisse beider Systeme MC1, MC2 bzw. Prozessoren 1,2 werden, wie ebenfalls in der vorgenannten Schrift erläutert ist, mit Hilfe eines Vergleichers 15 auf Übereinstimmung überwacht; es ist ein unmittelbarer Vergleich der Ausgangssignale beider Prozessoren mit Hilfe eines Hardware-Vergleichers 15 vorgesehen.

Ein wesentliches Merkmal des Mikroprozessorsystems nach der Erfindung und des in der Abbildung dargestellten Ausführungsbeispiels besteht nun darin, daß das eben beschriebene, aus der DE 195 29 434 A1 bekannte System durch ein weiteres, vollständiges Datenverarbeitungssystem, nämlich durch einen Mikrocomputer MC3, der ebenfalls mit dem unvollständigen Mikrocomputer MC2 und auch mit dem Mikrocomputer MC1 zusammenwirkt, erweitert ist. Ein Teil der Funktionen des zusätzlichen Mikrocomputersystems (MC3), insbesondere das Speichern der Festwert- und der Schreib-Lese-Daten, kann allerdings auf das zweite Mikrocomputersystem MC2 und auch auf das erste System MC1 übertragen werden, weil das Gesamtsystem für die Gewährleistung der Redundanzfunktion insgesamt nur die doppelte Speicherkapazität, zuzüglich einiger Speicherplätze für die Redundanzinformation, im Vergleich zu einem nicht redundanten, das gleiche Programm abarbeitenden System benötigt. Die Speicherkapazität muß dabei auf die drei Datenverarbeitungssysteme MC1, MC2, MC3 derart verteilt werden, daß bei Ausfall eines Systems die verbleibenden Systeme einen ausreichenden Speicherplatz, nämlich mindestens 100% zuzüglich der Redundanzdaten, bieten. Im dargestellten Ausführungsbeispiel sind die beiden Mikrocomputersysteme MC1 und MC3 jeweils mit einer Speicherkapazität von 100% im Vergleich zu den für ein nicht redundantes System benötigten Speicherplätzen ausgerüstet, während sich im Mikrocomputersystem MC2 lediglich die wenigen Plätze für die Redundanzdaten befinden.

Das dritte Mikrocomputersystem MC3 ist mit dem (unvollständigen) Mikrocomputer MC2 ebenfalls durch einen Bypass bzw. eine Bypass-Einheit 16 verbunden. Dieser Bypass hat die gleiche Funktion wie der bereits eingehend beschriebene Bypass 14 und ermöglicht daher auch den Zentraleinheiten 2 und 3 die redundante Verarbeitung aller Eingangsdaten.

Das Mikroprozessorsystem MC3 enthält einen Festwertspeicher 17 (ROM 2), einen Schreib-Lese-Speicher 18 (RAM 2), eine Eingabe- und Ausgabeeinheit 19 und Peripherie-Komponenten 20 (Peripherie 2). MC1 und MC3 sind im dargestellten Ausführungsbeispiel vollständige Mikrocomputer, für die allerdings, wie zuvor erläutert, eine reduzierte Speicherkapazität genügt.

Über die Bypässe 14,16 ist ein Datenfluß in beiden Richtungen vom BUS 1 (Bus-System 4) zum BUS 3 (Bus-System 6) gegeben. Zur weiteren Erhöhung der Ausfallsicherheit könnte es eventuell sinnvoll sein, über einen zusätzlichen Bypass, der nicht dargestellt ist, eine direkte Verbindung zwischen diesen beiden Bus-Systemen 4,6 (BUS 1 und BUS 3) herzustellen.

Der Mikrocomputer MC3 besitzt hier den gleichen Aufbau und die gleichen Komponenten wie der Mikrocomputer MC1. Folglich sind bei dem erfindungsgemäßen Mikroprozessorsystem auch die Eingabe- und Ausgabeeinheiten 9,19 und die Peripherie-Komponenten 20, 21, zu denen die Spannungsversorgung, der Sensorsignaleingang und die Aktuatoransteuerung zählen, zweimal vorhanden.

Die Ausgangssignale oder Datenverarbeitungsergebnisse des dritten Mikrocomputers MC3 werden mit Hilfe eines Vergleichers 22 auf Übereinstimmung mit den Ergebnissen oder Ausgangssignalen des Mikrocomputers MC2 bzw. der Zentraleinheit 2 sowie in gleicher Weise mit Hilfe des Vergleichers 23 auf Übereinstimmung mit den Ergebnissen des MC1 bzw. der Zentraleinheit 1 überprüft. Dadurch ist nicht nur eine Fehlererkennung, sondern auch eine Identifizierung des Systems, in dem der Fehler liegt, möglich. In einer Identifizierungs-Stufe 24, die vorzugsweise redundant ausgeführt und der die Ausgangssignale der Vergleicher 15, 22, 23 zugeleitet werden, wird durch eine Majoritätsentscheidung die Fehlerquelle erkannt und daraufhin das System auf eine Notlauffunktion umgeschaltet. Dies bedeutet, daß die Ausgabe von Steuersignalen in Abhängigkeit von den fehlerhaften Datenverarbeitungsergebnissen verhindert und statt dessen auf das intakte System umgeschaltet wird. Eine Verwertung der Datenverarbeitungsergebnisse während der Notlauffunktion ist deshalb auch bei sicherheitskritischen Regelungssystemen zulässig, weil auch bei Auftreten eines Fehlers weiterhin eine redundante Datenverarbeitung gewährleistet ist.

Das erfindungsgemäße System läßt sich mit vergleichsweise geringem Herstellungsaufwand realisieren. Im Prinzip genügt - im Vergleich zu dem bekannten System, das keinen Notlauf zuläßt - das Hinzufügen eines Prozessorkerns und die Erhöhung der Speicherkapazität auf das 2fache. Eine klassische Lösung mit Notlauffunktion würde mindestens den dreifachen Speicheraufwand erfordern; dies ist ein entscheidender Vorteil, weil die Kosten des Gesamtsystems maßgeblich von der Größe der Arbeitsspeicher (Festwert- und Schreib-Lese-Speicher) bestimmt werden.

Der Aufwand für die Vergleicher 15, 22, 23, die eine Identitätsüberwachung durchführen, ist minimal. Der Austausch von Signalen zwischen den einzelnen Mikrocomputern über die Bypässe erfordert keinen nennenswerten Aufwand. Programmtechnisch wird eine Software für ein scheinbares Einprozessorsystem realisiert; es werden keine Softwarestrukturen benötigt, die einen Austausch von Signalen zwischen den Mikrocomputern realisieren oder Signale auf Gleichheit oder Ähnlichkeit überprüfen.

Grundsätzlich ist es auch möglich, beim Auftreten eines internen Rechnerfehlers die Übernahme der Eingangsinformation und der Signalausgabe durch den fehlerfreien Kreis durchzuführen bzw. dem fehlerfreien Kreis zu übertragen. Dies führt zu weiteren Vereinfachungen und Systemfunktionen.

## Patentansprüche

1. Mikroprozessorsystem für sicherheitskritische Regelungen, mit redundanter Datenverarbeitung , mit mehreren Zentraleinheiten (CPU's), die über separate Bus-Systeme mit Festwertspeichern und Schreib-Lesespeichern, die auch Speicherplätze für Prüfdaten enthalten, mit Eingabe- und Ausgabeeinheiten und mit Vergleichern, die die Ausgangsdaten oder Ausgangssignale der Zentraleinheiten auf Übereinstimmung überprüfen, verbunden sind und die das gleiche Programm abarbeiten, wobei die Zentraleinheiten über die Bus-Systeme miteinander kommunizieren und wobei die Bus-Systeme untereinander durch Bypässe verbunden sind, die den Zentraleinheiten ein gemeinsames Lesen und Abarbeiten der anstehenden Daten, einschließlich der Prüfdaten und Befehle, ermöglichen, **dadurch gekennzeichnet, dass** drei Zentraleinheiten (1,2,3) vorhanden sind, die durch redundante Peripherie-Einheiten (10,20) zu zwei vollständigen Regelungssignalkreisen erweitert und derart zusammengeschaltet sind, dass die drei Zentraleinheiten (1,2,3) zusammen mit den Speichern (7,8,12,13,17,18), mit den Eingabe- und Ausgabeeinheiten (9,10) und mit den Peripherie-Einheiten (10,20) insgesamt zwei vollständige und ein unvollständiges Datenverarbeitungssystem bilden und dass bei Ausfall einer Zentraleinheit (1,2,3) und/oder zugehöriger Komponenten durch Majoritätsentscheidung in einer Identifizierungsstufe (24) die fehlerhafte Zentraleinheit identifiziert und eine Notlauffunktion aufrechterhalten wird, wobei in der Notlauffunktion die redundante Datenverarbeitung sowie der Vergleich der Datenverarbeitungsergebnisse auf Übereinstimmung aufrechterhalten und eine Nicht-Übereinstimmung signalisiert wird und wobei eine Ausgabe von Ausgangssignalen oder Steuersignalen unter Einschluss bzw. in Abhängigkeit von dem fehlerhaften System bzw. der fehlerhaften Zentraleinheit verhindert wird.

2. Mikroprozessorsystem nach Anspruch 1, **dadurch gekennzeichnet, dass** die drei Zentraleinheiten (1,2,3) mit je einem Bus-System (4,5,6) versehen sind und dass für die Festwertspeicher (7,12,17) und für die Schreib-Lese-Speicher (8,13,18) jeweils mindestens die doppelte Kapazität, zuzüglich einiger Speicherplätze für die Redundanzdaten, im Vergleich zu der für ein nicht redundantes System benötigten Speicherkapazität zur Verfügung steht, wobei über die Bypässe (14,16) eine Verbindung zwischen allen Zentraleinheiten (1,2,3) und den Speicherplätzen in Schreib- und Leserichtung und zu allen Eingabe- und Ausgabeeinheiten (9,10) besteht.

3. Mikroprozessorsystem nach Anspruch 1 oder 2, **dadurch gekennzeichnet, dass** die drei Datenverarbeitungssysteme jeweils mindestens eine Zentraleinheit (1,2,3) und ein Bus-System (4,5,6) sowie Festwert- und Schreib-Lese-Speicher (7,17;8,18) und/oder Redundanzinformationsspeicher (12,13) umfassen, wobei die Speicherplätze derart auf die einzelnen Datenverarbeitungssysteme verteilt sind, dass beim Auftreten eines Fehlers und Übergang zur Notlauffunktion die intakten Systeme ausreichend Speicherplätze für die komplette Datenverarbeitung und für die Redundanzinformationen enthalten und das komplette Programm abarbeiten.

4. Mikroprozessorsystem nach einem oder mehreren der Ansprüche 1 bis 3, **dadurch gekennzeichnet, dass** den Vergleichern (15,22,23) jeweils die Datenverarbeitungsergebnisse bzw. Ausgangssignale von zwei Zentraleinheiten (1,2,3) zuführbar sind.

5. Mikroprozessorsystem nach einem oder mehreren der Ansprüche 1 bis 4, **dadurch gekennzeichnet, dass** zumindest die Zentraleinheiten (1,2,3) mit den Bus-Systemen (4,5,6), die Speicher (7,8,12,13,17,18), die Bypässe (14,16), die Eingabe- und Ausgabeeinheiten (9,19), Vergleicher (15,22,23) und Identifizierungsstufen (24) auf einem gemeinsamen Chip angeordnet sind.

6. Mikroprozessorsystem nach einem oder mehreren der Ansprüche 1 bis 5, **dadurch gekennzeichnet, dass** dieses für mehrere oder für eine Kombination von Kraftfahrzeug-Regelungssystemen, wie Brake-by-wire, ABS, ASR, ASMS etc., ausgelegt ist und dass die Notlauffunktion die Aufrechterhaltung des Betriebs aller Regelungssysteme erfasst.

7. Mikroprozessorsystem nach einem oder mehreren der Ansprüche 1 bis 5, **dadurch gekennzeichnet, dass** dieses für mehrere oder für eine Kombination von Kraftfahrzeug-Regelungssystemen ausgelegt ist und dass die Notlauffunktion auf die Aufrechterhaltung des Betriebs ausgewählter Regelungsfunktionen, zum Beispiel besonders sicherheitskritischer Funktionen, beschränkt ist.

## Claims

1. Microprocessor system for safety-critical control operations, including redundant data processing, a plurality of central units (CPUs) which are connected, by way of separate bus systems, to read-only memories and random-access memories that also have memory locations for test data, to input and output units and to comparators which check the output data or output signals of the central units for correlation, wherein the central units execute the same program and communicate with each other by way of the bus systems, and the bus systems are interconnected by bypasses which enable the central units to jointly read and process the existing data, including the test data and commands,
**characterized in that** three central units (1,2,3) are provided which are extended by redundant periphery units (10, 20) into two complete control signal circuits and are interconnected in such a manner that the three central units (1,2,3) along with the memories (7,8,12,13,17,18), the input and output units (9,10), and the periphery units (10,20) form two complete and one incomplete data processing systems in total, and that, upon failure of a central unit (1,2,3) and/or associated components, the faulty central unit is identified by a majority decision in an identification stage (24) and an emergency operation mode is maintained, wherein in the emergency operation mode, redundant data processing and comparison of the data processing results for correlation is maintained and non-correlation is signalled, and wherein a delivery of output signals or control signals by the inclusion of, or as a function of, the faulty system or the faulty central unit is prevented.

2. Microprocessor system as claimed in claim 1,
**characterized in that** the three central units (1,2,3) include one bus system (4,5,6) each, and **in that** at least the double capacity, plus some memory locations for the redundance data, compared to the memory capacity required for a non-redundant system, is available for the read-only memories (7,12,17) and for the random-access memories (8,13,18), wherein by way of the bypasses (14,16) there is a connection between all central units (1,2,3) and the memory locations in the write and read directions and to all input and output units (9,10).

3. Microprocessor system as claimed in claim 1 or 2,
**characterized in that** each of the three data processing systems comprises at least one central unit (1,2,3) and a bus system (4,5,6) as well as read-only and random-access memories (7,17;8,18) and/or redundance information memories (12,13), and the memory locations are distributed among the individual data processing systems so that, upon the occurrence of an error and switch-over to the emergency operation mode, the intact systems have a sufficient number of memory locations for the complete data processing and for redundance information, and execute the complete program.

4. Microprocessor system as claimed in any one or more of claims 1 to 3,
**characterized in that** the data processing results or output signals of two central units (1,2,3) can be sent to the comparators (15,22,23) respectively.

5. Microprocessor system as claimed in any one or more of claims 1 to 4,
**characterized in that** at least the central units (1,2,3) with the bus systems (4,5,6), the memories (7,8,12,13,17,18), the bypasses (14,16), the input and output units (9,19), comparators (15,22,23), and identification stages (24) are located on one joint chip.

6. Microprocessor system as claimed in any one or more of claims 1 to 5,
**characterized in that** the latter system is intended for use on a plurality of or a combination of automotive vehicle control systems such as brake-by-wire, ABS, TCS, ASMS, etc., and **in that** the emergency operation mode covers maintaining the operation of all control systems.

7. Microprocessor system as claimed in any one or more of claims 1 to 5,
**characterized in that** the latter system is intended for use on a plurality of or a combination of automotive vehicle control systems, and **in that** the emergency operation mode is limited to maintaining the operation of selected control functions, for example, functions which are especially critical in terms of safety.

## Revendications

1. Système de microprocesseur pour régulations critiques en ce qui concerne la sécurité, à traitement de données redondant, comprenant plusieurs unités centrales (CPU), qui sont reliées par l'intermédiaire de systèmes de bus séparés à des mémoires mortes et des mémoires vives contenant également des emplacements de mémoire pour des données de vérification, à des unités d'entrée et de sortie, et à des comparateurs vérifiant les données de sortie ou signaux de sortie des unités centrales en ce qui concerne une concordance, et qui exécutent le même programme, les unités centrales communiquant entre elles par l'intermédiaire des systèmes de bus et les systèmes de bus étant reliés entre eux au moyen de dérivations qui permettent aux unités centrales une lecture et un traitement communs des données se présentant, y compris les données de vérification et des instructions, **caractérisé en ce qu'**il est prévu trois unités centrales (1, 2, 3) qui sont étendues au moyen d'unités périphériques (10, 20) redondantes pour donner deux circuits de signaux de régulation complets et sont connectées ensemble d'une manière telle que les trois unités centrales (1, 2, 3) forment, en commun avec les mémoires (7, 8, 12, 13, 17, 18), avec les unités d'introduction et de délivrance (9, 19) et avec les unités périphériques (10, 20), en tout deux systèmes de traitement de données complets et un système de traitement de données incomplet, et **en ce qu'**en cas de défaillance d'une unité centrale (1, 2, 3) et/ou de composants associés, il est prévu qu'au moyen d'une décision à la majorité dans un étage d'identification (24), l'unité centrale défectueuse est identifiée et une fonction de secours est entretenue, et que, dans la fonction de secours, le traitement de données redondant et la comparaison des résultats de traitement de données en ce qui concerne une concordance sont maintenus et une non concordance est signalée, tandis qu'une délivrance de signaux de sortie et de signaux de commande, y compris du système défectueux ou de l'unité centrale défectueuse ou en fonction de celui-ci ou celle-ci, est empêchée.

2. Système de microprocesseur suivant la revendication 1, **caractérisé en ce que** les trois unités centrales (1, 2, 3) sont pourvues chacune d'un système de bus (4, 5, 6) et **en ce que**, pour la mémoire morte (7, 12, 17) et pour la mémoire vive (8, 13, 18), c'est chaque fois au moins la capacité double, augmentée de quelques emplacements de mémoire pour les données de redondance, qui est disponible en comparaison de la capacité de mémoire nécessaire pour un système non redondant, tandis qu'au moyen des dérivations (14, 16), il existe une liaison entre toutes les unités centrales (1, 2, 3) et les emplacements de mémoire dans la mémoire vive et vers toutes les unités d'introduction et de délivrance (9, 10).

3. Système de microprocesseur suivant la revendication 1 ou 2, **caractérisé en ce que** les trois systèmes de traitement de données comprennent chacun au moins une unité centrale (1, 2, 3) et un système de bus (4, 5, 6), ainsi qu'une mémoire morte et une mémoire vive (7, 17 ; 8, 18) et/ou des mémoires d'information de redondance (12, 13), les emplacements de mémoire étant répartis sur les différents systèmes de traitement de données d'une manière telle que, lors de l'apparition d'un défaut et d'un passage à la fonction de secours, les systèmes intacts contiennent suffisamment d'emplacements de mémoire pour le traitement de données complet et pour les informations de redondance et exécutent le programme complet.

4. Système de microprocesseur suivant une ou plusieurs des revendications 1 à 3, **caractérisé en ce que** les résultats de traitement de données ou les signaux de sortie de deux unités centrales (1, 2, 3) peuvent chaque fois être envoyés aux comparateurs (15, 22, 23).

5. Système de microprocesseur suivant une ou plusieurs des revendications 1 à 4, **caractérisé en ce qu'**au moins les unités centrales (1, 2, 3) sont disposées, avec les systèmes de bus (4, 5, 6), les mémoires (7, 8, 12, 13, 17, 18), les dérivations (14, 16), les unités d'introduction et de délivrance (9, 19), des comparateurs (15, 22, 23) et des étages d'identification (24), sur une puce commune.

6. Système de microprocesseur suivant une ou plusieurs des revendications 1 à 5, **caractérisé en ce que** celui-ci est conçu pour plusieurs systèmes de régulation de véhicule automobile, tels que frein-par-fil, ABS, ASR, ASMS, etc., ou une combinaison de tels système, et **en ce que** la fonction de secours détecte le maintien du fonctionnement de tous les systèmes de régulation.

7. Système de microprocesseur suivant une ou plusieurs des revendications 1 à 5, **caractérisé en ce que** celui-ci est conçu pour plusieurs systèmes de régulation de véhicule automobile ou pour une combinaison de tels systèmes et **en ce que** la fonction de secours est limitée au maintien du fonctionnement de fonctions de régulation sélectionnées, par exemple de fonctions particulièrement critiques en ce qui concerne la sécurité.
